# EUROPEAN PATENT SPECIFICATION

(11) **EP 0 602 143 B1**
(45) Date of publication and mention of the grant of the patent: **06.12.1995**
(21) Application number: 92919259.9
(22) Date of filing: 24.08.1992
(51) Int. Cl.: B23F 15/08, F01C 21/08, F04C 18/16

(54) **ROTOR FOR A SCREW ROTOR MACHINE**
ROTOR FÜR EINE SCHRAUBENROTORMASCHINE
VIS SANS FIN DESTINEE AUX MACHINES

(30) Priority: 03.09.1991 SE 9102530
(43) Date of publication of application: 22.06.1994
(73) Proprietor: OPCON AUTOROTOR AB, 131 60 Nacka (SE)
(72) Inventor: WICEN, Jan, S-132 30 Saltsjö Boo (SE)
(74) Representative: Karlsson, Leif Karl Gunnar
(86) International application number: SE9200578
(87) International publication number: WO9304811

(56) References cited:
- DE-A- 3 621 178
- US-A- 4 761 124
- US-A- 4 846 642

## Description

The present invention relates to a rotor for a screw rotor machine of the kind described in the introduction of the following claim 1.

On rotors of this type, with a rotor body of plastics material moulded on a shaft, the shaft is prevented from being twisted off from the rotor body by the shaft being provided with radially protruding projections distributed in equal partition around the shaft. For especially female rotors it is thereby suitable to design the projections as helical, radial flanges with the same pitch as the lands of the rotor body, in which the flanges extend a short distance into the central part of the lands. At high rpm it has turned out that the rotor bodies in spite of these measures are inclined to be broken off or separate from the shaft and its projections.

The object of the invention is to bring about an additional reinforcement of the rotor body's adhesion to the shaft and its projections.

This has, according to the invention, been achieved by giving the shaft's projections the characteristic features set forth in claim 1. Additional suitable embodiments have the characteristic features set forth in claims 2 to 4.

By means of the peripherally directed wings of the projections a major part of the tensile force is relieved, which otherwise at the rotation of the rotor would arise at the surface of the rotor shaft due to the mass of the part of the rotor body positioned radially outside the shaft. The wings shall suitably be placed as distant as possible from the surface of the shaft. If the shrinking of the projections can be arranged to exceed the shrinking of the plastics material during the rotor's cooling at the manufacturing, even compression of the plastics material radially inside the wings might be achieved.

The projections and wings belonging to them can be designed in several ways in order to support the adhesion of the rotor body to the shaft. Especially simple and efficient even from a manufacturing point of view is to let each projection be equipped with two in opposite directions extending, similar wings, originating from the projection's ridge. In this case these should be extending without disruption between the rotor's ends, and one can easily and cheaply produce the shaft with projections and wings in an extruding operation. This is suitably done by using a suitable light metal. If the shaft's rigidity has to be reinforced a tubular shaft can be extruded which then is pressed onto a steel shaft. At the extruding operation the projections and the wings can be given a helical design with the same pitch as the intended lands of the rotor body. A male rotor should in that case have as many lands as projections, at which each projection should extend a bit into the central part of the corresponding land, where the wings have the largest tensile force reducing effect.

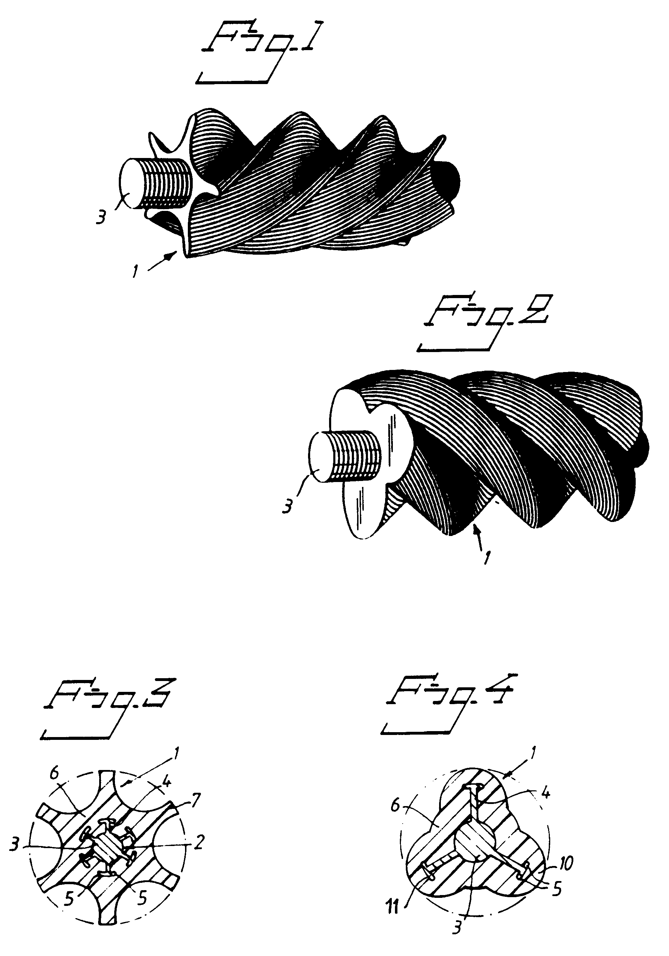

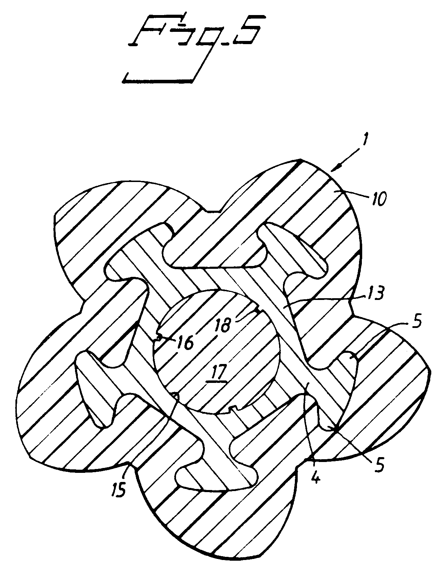

The invention will now be described in more detail in the following with reference to the accompanying drawings, which show different examples of embodiments of rotors according to the invention and on which Figures 1 and 2, respectively, are perspective views of respectively a female and a male rotor, Figures 3 and 4 are cross section views of the rotors shown in Figures 1 and 2 and Figure 5 is a cross section view of a male rotor according to a preferred embodiment.

Figures 1 and 3 show a female rotor with a rotor body 1 moulded of a plastics material on a metal core 2 in a manner known per se. The metal core comprises a circular shaft 3 provided with a number of radial projections or flanges 4, extending along almost the whole length of the rotor body. Along the outer edge line of each flange 4 are extending two in opposite directions directed, peripheral wings 5.

The rotor body 1 has a circular cylindrical part 6, coaxial with the shaft 3 from which part the helically designed lands 7 extend.

The metal core 2 is extruded with helically designed continuous flanges 4 and wings 5, at which by symmetrical reasons a flange 4 is arranged in the line with each land 7. The flanges 4 with the wings 5 can also have another location with respect to the lands 7 and another number, and they can also be straight.

The male rotor shown in Figures 2 and 4, however, must have the same number of flanges 4 as the number of lands 10 and be helically designed together with the wings 5 in the central parts of the lands 10. Possibly every flange 4 may be equipped with an additional pair of wings 11. The mass of the lands 10 is considerably larger than the mass of the female rotor's lands 7, which makes the invention first of all intended for male rotors.

The presented preferred embodiment shown in Figure 5 is a male rotor with five lands 10. It has a shaft 13 with a mainly pentagonical cross section. The flanges of the shaft 13, are strongly dimensioned and have strongly dimensioned wings 5 with smooth transition sections between wings 5 and flanges 4 as well between flanges 4 and shaft 13.

The dimensioning of the wings 5 is chosen such that the same tensile stress is caused in the plastics material at the rotation of the rotor.

The metal core 13, 4, 5 is extruded from an aluminium alloy and cut to the right length, then the ends are turned down to form the shaft ends 3. After that the rotor body has been moulded on the metal core and axially somewhat in excess of the core, such that only the shaft ends 3 of the metal core are visible.

It is, as mentioned before, essential that the wings 5 are placed in the central parts of the lands 10 in order to as much as possible reduce the tensile stresses in the plastics material along the surface of the metal core 13, 4, 5.

In the embodiment shown in Fig. 5 an increased bending strength has been achieved by the metal core 13, 4, 5 being extruded in the shape of a hollow body. A circular cylindrical hole 15 with a number of inwardly directed, straight lands or splines 16 have been formed, into which hole a steel shaft 17 provided with a number of grooves 18 corresponding to the lands 16 has been pressed.

## Claims

1. A rotor for a screw rotor machine, the rotor having a number of helically extending lands (10) and intermediate grooves forming a working face of the rotor, the rotor comprising:
a shaft member (13);
a rotor body (1) made of plastics material molded on and around the shaft member (13) so as to adhere to the surface of the shaft member (13), said rotor body made of plastics material defining said lands such that said lands are substantially made of plastics material; and
a plurality of radially directed projections (4) extending from the shaft member (13) with substantially equal distribution around the shaft member (13);
said projections (4) being integrally formed as one piece with the shaft member (13) characterized in that said projections (4) extend helically around the surface of the shaft member (13) with the same pitch as the lands (10), said projections (4) each being associated with and in registration with a respective corresponding land (10); and
said projections (4) further having helically extending substantially peripherally directed wings (5) of considerable peripheral width with smoothly rounded edges, said wings (5) being integrally formed as one piece with said projections (4), said wings (5) being located substantially in the central line of the corresponding land (10) and being dimensioned to relieve during rotation of the rotor a major part of tensile stresses acting on the plastics material of said rotor body (1) adhering to the surface of the shaft member (13).

2. The rotor of claim 1, characterized in that each of said radially directed projections (4) has two oppositely directed peripherally extending wings (5) originating from an end portion thereof.

3. The rotor of claim 1 or 2, characterized in that said radially directed projections (4) and said wings (5) extend with substantially no disruption along the length of the rotor between respective ends of the rotor.

4. The rotor of claim 1, 2 or 3, characterized in that said shaft member (13), said projections (4) and said wings (5) comprise a single extrusion of metal material, preferably a light metal alloy.

## Patentansprüche

1. Rotor für eine Schraubenrotormaschine, der eine Anzahl sich schraubenförmig erstreckender Rippen (10) und dazwischenliegender Nuten besitzt, die eine Arbeitsfläche des Rotors bilden, und die folgenden Merkmale aufweist: ein Wellenelement (13)
einen Rotorkörper (1) aus Kunststoff, der auf und um das Wellenelement (13) herum so geformt ist, daß er an der Oberfläche des Wellenelements (13) haftet, wobei der Rotorkörper aus Kunststoff die Rippen bildet, so daß diese im wesentlichen aus Kunststoff bestehen, und
eine Mehrzahl sich radial von dem Wellenelement (13) erstreckender, im wesentlichen gleichmäßig um das Wellenelement (13) verteilter Vorsprünge (4), die einstückig mit dem Wellenelement (13) ausgebildet sind,
**dadurch gekennzeichnet,** daß sich die Vorsprünge (4) schraubenförmig mit der gleichen Steigung wie die Rippen (10) um die Oberfläche des Wellenelements (13) erstrecken, jeweils mit einer Rippe (10) in Flucht verbunden sind und sich schraubenförmig erstreckende, im wesentlichen in Umfangsrichtung ausgerichtete, an den Kanten glatt abgerundete Flügel (5) von beträchtlicher Umfangsbreite besitzen, die einstückig mit den Vorsprüngen (4) ausgebildet sind, im wesentlichen auf der Mittellinie der entsprechenden Rippe (10) liegen und so dimensioniert sind, daß sie während des Drehens des Rotors einen Großteil der Zugspannungen aufnehmen, die auf den an der Oberfläche des Wellenelements (13) haftenden Kunststoff des Rotorkörpers (1) wirken.

2. Rotor nach Anspruch 1, **dadurch gekennzeichnet,** daß jeder der sich radial erstreckenden Vorsprünge (4) zwei entgegengesetzt gerichtete, sich in Umfangsrichtung erstreckende Flügel (5) aufweist, die an seinem Endbereich ansetzen.

3. Rotor nach Anspruch 1 oder 2, **dadurch gekennzeichnet,** daß die radial gerichteten Vorsprünge (4) und die Flügel (5) sich im wesentlichen ohne Unterbrechung über die Länge des Rotors zwischen dessen Enden erstrecken.

4. Rotor nach einem der Ansprüche 1 bis 3, **dadurch gekennzeichnet,** daß das Wellenelement (13), die Vorsprünge (4) und die Flügel (5) aus einem einzigen Strang metallischen Materials, vorzugsweise einer Leichtmetallegierung, bestehen.

## Revendications

1. Rotor pour une machine à rotor en hélice, le rotor présentant un certain nombre de filets (10) s'étendant hélicoïdalement et des sillons intermédiaires formant une face de travail du rotor, le rotor comprenant:
un élément formant arbre (13);
un corps de rotor (1) en matière plastique moulé sur et autour de l'élément formant arbre (13), de façon à adhérer à la surface de l'élément formant arbre (13), ledit corps de rotor en matière plastique définissant lesdits filets, de telle sorte que lesdits filets sont essentiellement constitués de matière plastique; et
plusieurs saillies orientées en direction radiale (4), qui s'étendent sur l'élément formant arbre (13), selon une répartition sensiblement uniforme autour de l'élément formant arbre (13);
lesdites saillies (4) étant formées d'un seul tenant, en une pièce, avec l'élément formant arbre (13),
caractérisé en ce que lesdites saillies (4) s'étendent hélicoïdalement autour de la surface de l'élément formant arbre (13), avec le même pas que les filets (10), lesdites saillies (4) étant chacune associées à et en alignement avec un filet correspondant respectif (10); et
lesdites saillies (4) comportant, en outre, des ailettes (5) s'étendant hélicoïdalement et orientées sensiblement dans le sens périphérique, ailettes qui présentent une très grande largeur dans le sens périphérique, avec des bords arrondis régulièrement, lesdites ailettes (5) étant formées d'un seul tenant, en une pièce, avec lesdites saillies (4), lesdites ailettes (5) étant positionnées sensiblement sur la ligne centrale du filet correspondant (10) et étant dimensionnées de façon à relâcher, au cours de la rotation du rotor, une partie prépondérante des contraintes de traction s'exerçant sur la matière plastique dudit corps de rotor (1), qui adhère à la surface de l'élément formant arbre (13).

2. Rotor selon la revendication 1, caractérisé en ce que chacune desdites saillies (4), orientées en direction radiale, comporte deux ailettes (5) s'étendant dans le sens périphérique, dans des directions opposées, et prenant naissance sur une partie d'extrémité de la saillie.

3. Rotor selon la revendication 1 ou 2, caractérisé en ce que lesdites saillies (4), orientées en direction radiale, et lesdites ailettes (5) s'étendent, sensiblement sans interruption, dans le sens de la longueur du rotor, entre les extrémités respectives du rotor.

4. Rotor selon la revendication 1, 2 ou 3, caractérisé en ce que ledit élément formant arbre (13), lesdites saillies (4) et lesdites ailettes (5) sont constitués par une pièce extrudée unique en un matériau métallique, de préférence en un alliage métallique léger.
